# EUROPÄISCHE PATENTSCHRIFT

(11) **EP 4 126 582 B1**
(45) Veröffentlichungstag und Bekanntmachung des Hinweises auf die Patenterteilung: **24.04.2024**
(21) Anmeldenummer: 21706219.9
(22) Anmeldetag: 15.02.2021
(51) Int. Cl.: B60L 1/00, H02J 50/10, H02J 7/00, H01M 10/46

(54) **LADEADAPTER ZUM LADEN EINER FAHRZEUGBATTERIE**
CHARGE ADAPTER FOR CHARGING A VEHICLE BATTERY
ADAPTATEUR DE CHARGE PERMETTANT DE CHARGER UNE BATTERIE DE VÉHICULE

(30) Priorität: 26.03.2020 DE 102020108363
(43) Veröffentlichungstag der Anmeldung: 08.02.2023
(73) Patentinhaber: Bayerische Motoren Werke Aktiengesellschaft, 80809 München (DE)
(72) Erfinder: FROESCHL, Joachim, 82211 Herrsching (DE); PFEIFFER, Christian, 82140 Olching (DE)
(86) Internationale Anmeldenummer: PCT/EP2021/053660
(87) Internationale Veröffentlichungsnummer: WO 2021/190818

(56) Entgegenhaltungen:
- US-A1- 2008 309 287
- US-A1- 2013 175 982
- US-A1- 2013 278 207

## Beschreibung

Die Erfindung betrifft einen Ladeadapter, der es ermöglicht, eine Fahrzeugbatterie in effizienter, präziser und komfortabler Weise zu laden.

Ein Fahrzeug umfasst typischerweise eine Fahrzeugbatterie, insbesondere eine Blei-Batterie, die ausgebildet ist, elektrische Energie für den Betrieb von elektrischen Verbrauchern des Fahrzeugs zu speichern. Dabei weist eine Fahrzeugbatterie (insbesondere eine Blei-Starter-Batterie) typischerweise eine relativ hohe Selbstentladung auf. Dies kann zu einer erhöhten Alterung im Falle einer relativ langen und/oder tiefen Entladung der Batterie führen. Aus diesem Grund sollte eine Fahrzeugbatterie, insbesondere eine Blei-Batterie, möglichst vollständig geladen sein, um die Lebensdauer der Batterie zu verlängern.

US 2008/309287 A1 beschreibt eine Vorrichtung zum drahtlosen Laden eines elektronischen Geräts. US 2013/278207 A1 beschreibt eine Vorrichtung zum drahtgebundenen und zum drahtlosen Laden eines elektronischen Geräts. US 2013/175982 A1 beschreibt einen wiederaufladbaren Energiespeicher.

Das vorliegende Dokument befasst sich mit der technischen Aufgabe, ein effizientes, präzises und komfortables Laden einer Fahrzeugbatterie zu ermöglichen (insbesondere während der Fertigung eines Fahrzeugs und/oder während der Lagerung einer Fahrzeugbatterie).

Die Aufgabe wird durch den unabhängigen Anspruch gelöst. Vorteilhafte Ausführungsformen werden u.a. in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Gemäß einem Aspekt wird ein Ladeadapter zum Laden einer Fahrzeugbatterie beschrieben. Der Ladeadapter kann ausgebildet sein, eine 12V Fahrzeugbatterie, eine Blei-Batterie und/oder eine Starter-Batterie für ein (Kraft-) Fahrzeug zu laden. Die Fahrzeugbatterie kann z.B. eine Speicherkapazität von 50Ah oder mehr aufweisen. Der Ladeadapter kann als steckbarer Aufsatz ausgebildet sein, der auf den Deckel und/oder auf die Oberseite einer Fahrzeugbatterie gesteckt werden kann. Dabei können z.B. Kontakte des Ladeadapters derart ausgebildet sein, dass die Kontakte auf entsprechende Pole an dem Deckel und/oder an der Oberseite einer Fahrzeugbatterie gesteckt werden können, um den Ladeadapter an dem Deckel und/oder der Oberseite der Fahrzeugbatterie zu halten.

Der Ladeadapter umfasst einen Träger. Der Träger kann als Platte, insbesondere als starre Platte, ausgebildet sein (die z.B. zumindest teilweise oder vollständig den Deckel und/oder die Oberseite einer Fahrzeugbatterie bedeckt). Alternativ kann der Träger als Folie, insbesondere als Klebefolie, ausgebildet sein (die z.B. auf den Deckel oder die Oberseite einer Fahrzeugbatterie gelegt bzw. geklebt werden kann). Die unterschiedlichen Komponenten des Ladeadapters können über den Träger zusammengehalten werden.

Des Weiteren umfasst der Ladeadapter eine an dem Träger befestigte Ladespule, die ausgebildet ist, in Reaktion auf ein magnetisches Ladefeld einen Wechsel-Ladestrom zu generieren. Das magnetische Ladefeld kann z.B. durch ein induktives Ladegerät generiert werden, wobei das induktive Ladegerät typischerweise eine komplementäre Spule zu der Ladespule des Ladeadapters aufweist. Das magnetische Ladefeld kann ein Wechselfeld sein, z.B. mit einer Ladefeld-Frequenz im Bereich zwischen 30kHz und 120kHz.

Die Ladespule kann eine Flachspule umfassen, insbesondere sein. Die ein oder mehreren Windungen der Ladespule können dabei parallel zu dem Träger des Ladeadapters (und/oder parallel zu dem Deckel und/oder der Oberseite einer Fahrzeugbatterie) angeordnet sein. Insbesondere kann die Ladespule derart an dem Träger angeordnet sein, dass zum Laden einer Fahrzeugbatterie ein induktives Ladegerät, das ausgebildet ist, das magnetische Ladefeld zu generieren, auf den Träger gelegt werden kann (und als Folge daraus in der Ladespule ein Wechsel-Ladestrom induziert wird). Alternativ oder ergänzend kann die Ladespule derart an dem Träger angeordnet sein, dass der Kopplungsfaktor zwischen einer Spule eines induktiven Ladegeräts und der Ladespule maximal ist, wenn das induktive Ladegerät auf den Träger gelegt wird. So kann ein komfortabler und energieeffizienter Ladevorgang einer Fahrzeugbatterie ermöglicht werden.

Der Ladeadapter umfasst einen an dem Träger befestigten Gleichrichter (z.B. einen geschalteten Gleichrichter und/oder einen Dioden-Gleichrichter), der eingerichtet ist, auf Basis des Wechsel-Ladestroms einen gleichgerichteten Ladestrom zu erzeugen. Des Weiteren kann der Ladeadapter einen Laderegler umfassen, der eingerichtet ist, während eines Ladevorgangs einer Fahrzeugbatterie (wenn der Ladeadapter auf eine Fahrzeugbatterie gesteckt ist), den Ladestrom und/oder eine Ladespannung (an der Fahrzeugbatterie) einzustellen, insbesondere (auf einen jeweiligen Sollwert) zu regeln. So kann ein besonders zuverlässiger Ladevorgang einer Fahrzeugbatterie ermöglicht werden.

Außerdem umfasst der Ladeadapter einen an dem Träger befestigten Plus-Kontakt und einen an dem Träger befestigten Minus-Kontakt, die ausgebildet sind, auf den Plus-Pol bzw. auf den Minus-Pol einer Fahrzeugbatterie gesteckt zu werden (um den Ladeadapter galvanisch leitend mit der Fahrzeugbatterie zu koppeln). Die Kontakte und die Pole können komplementär zueinander ausgebildet sein.

Der Ladeadapter umfasst ferner Leitungen, die ausgebildet sind, den gleichgerichteten Ladestrom an den Plus-Kontakt und den Minus-Kontakt zu leiten. Der an dem Gleichrichter bereitgestellte, gleichgerichtete Ladestrom kann dann über die Leitungen und über die Kontakte an die Pole der zu ladenden Fahrzeugbatterie geleitet werden. Dabei kann zumindest eine der Leitungen eine Sicherung, insbesondere eine Schmelzsicherung, aufweisen. So kann ein besonders sicherer Ladevorgang ermöglicht werden.

Es wird somit ein Ladeadapter beschrieben, der zum Laden einer Fahrzeugbatterie auf die Fahrzeugbatterie gesetzt werden kann, und somit einen zuverlässigen und komfortablen Ladevorgang ermöglicht.

Der Plus-Kontakt und/oder der Minus-Kontakt der Ladevorrichtung können verschiebbar an dem Träger angeordnet sein. Mit anderen Worten, der Plus-Kontakt und/oder der Minus-Kontakt können derart an dem Träger angeordnet sein, dass der Abstand zwischen dem Plus-Kontakt und dem Minus-Kontakt veränderbar ist. Insbesondere können der Plus-Kontakt und/oder der Minus-Kontakt über eine Schiene verschiebbar an dem Träger angeordnet sein. Der Ladeadapter kann somit derart ausgebildet sein, dass der Abstand zwischen den Kontakten und/oder die Position eines Kontaktes verändert werden kann. So kann der Ladeadapter in komfortabler Weise an unterschiedliche Typen von Fahrzeugbatterien angepasst werden.

Der Ladeadapter kann eine Anzeige (insbesondere einen Bildschirm) umfassen. Des Weiteren kann der Ladeadapter eine Steuereinheit umfassen, die eingerichtet ist, Daten in Bezug auf den Ladestrom, in Bezug auf die Batteriespannung und/oder in Bezug auf die Temperatur der Fahrzeugbatterie zu ermitteln. Die Daten können über ein oder mehrere Sensoren (z.B. einen Stromsensor, einen Spannungssensor und/oder einen Temperatursensor) des Ladeadapters bereitgestellt werden. Des Weiteren kann die Steuereinheit eingerichtet sein, die ermittelten Daten über die Anzeige auszugeben. So kann es einem Nutzer ermöglicht werden, einen Ladevorgang in besonders zuverlässiger und komfortabler Weise zu überwachen.

Der Ladeadapter kann eine Kommunikationseinheit umfassen, die eingerichtet ist, Daten in Bezug auf die (zu ladende) Fahrzeugbatterie und/oder in Bezug auf einen Ladevorgang der Fahrzeugbatterie über eine Kommunikationsverbindung, insbesondere über eine drahtlose Kommunikationsverbindung, zu versenden. Insbesondere können Daten in Bezug auf den Ladestrom, in Bezug auf die Batteriespannung und/oder in Bezug auf die Temperatur der Fahrzeugbatterie über die Kommunikationsverbindung versendet werden. So kann der Komfort eines Ladevorgangs weiter erhöht werden. Insbesondere kann so eine Fernüberwachung eines Ladevorgangs ermöglicht werden.

Die Steuereinheit des Ladeadapters kann eingerichtet sein, Abstandsinformation in Bezug auf den eingestellten Abstand zwischen dem Plus-Kontakt und dem Minus-Kontakt zu ermitteln. Des Weiteren kann die Steuereinheit eingerichtet sein, einen Ladevorgang der Fahrzeugbatterie, an der der Ladeadapter befestigt und/oder angesteckt ist, in Abhängigkeit von der Abstandsinformation zu steuern. So können in zuverlässiger und komfortabler Weise Ladevorgänge für unterschiedliche Typen von Fahrzeugbatterien ermöglicht werden.

Gemäß einem weiteren Aspekt wird ein (Straßen-)Kraftfahrzeug (insbesondere ein Personenkraftwagen oder ein Lastkraftwagen oder ein Bus) beschrieben, das den in diesem Dokument beschriebenen Ladeadapter umfasst.

Gemäß einem weiteren Aspekt wird ein Laderegal beschrieben, das eine Abstellfläche für eine Vielzahl von zu ladenden Fahrzeugbatterien und eine entsprechende Vielzahl von Ladeadaptern umfasst. Des Weiteren können an dem Laderegal ein oder mehrere induktive Ladegeräte angeordnet sein.

Es ist zu beachten, dass die in diesem Dokument beschriebenen Vorrichtungen und Systeme sowohl alleine, als auch in Kombination mit anderen in diesem Dokument beschriebenen Vorrichtungen und Systemen verwendet werden können. Des Weiteren können jegliche Aspekte der in diesem Dokument beschriebenen Vorrichtungen und Systemen in vielfältiger Weise miteinander kombiniert werden. Insbesondere können die Merkmale der Ansprüche in vielfältiger Weise miteinander kombiniert werden.

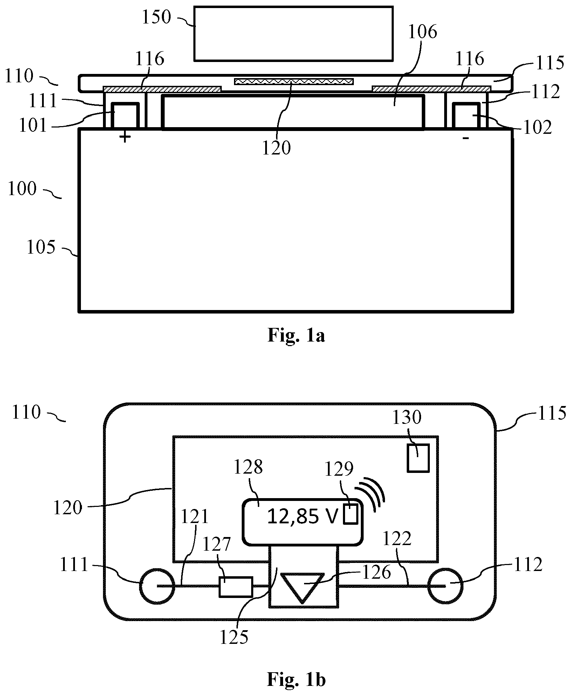

Im Weiteren wird die Erfindung anhand von Ausführungsbeispielen näher beschrieben. Dabei zeigen
Figur 1a eine beispielhafte Fahrzeugbatterie mit einem Ladeadapter; und
Figur 1b einen beispielhaften Ladeadapter.

Wie eingangs dargelegt, befasst sich das vorliegende Dokument damit ein effizientes und komfortables Laden einer Fahrzeugbatterie zu ermöglichen. In diesem Zusammenhang zeigt Fig. 1a eine beispielhafte Fahrzeugbatterie 100, insbesondere eine Blei-Batterie und/oder eine Starter-Batterie und/oder eine 12V-Batterie. Die Batterie 100 umfasst einen Plus-Pol 101 und einen Minus-Pol 102, die typischerweise an der Oberseite der Gehäuses 105 der Batterie 100 angeordnet sind. Die Pole 101, 102 werden typischerweise in einem Fahrzeug mit Stromleitungen des elektrischen Bordnetzes des Fahrzeugs verbunden.

Des Weiteren zeigt Fig. 1a einen beispielhaften Ladeadapter 110 mit einem Träger 115. An dem Träger 115 ist ein Plus-Kontakt 111 angeordnet (insbesondere befestigt), der ausgebildet ist, mit dem Plus-Pol 101 der Batterie 100 (elektrisch leitend) verbunden zu werden. Des Weiteren ist an dem Träger ein Minus-Kontakt 112 angeordnet (insbesondere befestigt), der ausgebildet ist, mit dem Minus-Pols 102 der Batterie (elektrisch leitend) verbunden zu werden. Insbesondere kann der Ladeadapter 110 derart ausgebildet sein, dass die Kontakte 111, 112 auf die entsprechenden Pole 101, 102 gesteckt werden können, und so der Ladeadapter 110 auf der Batterie 100 gehalten wird.

Zumindest einer der Kontakte 111, 112 kann verschiebbar, z.B. entlang einer Schiene 116 verschiebbar, an dem Träger 110 befestigt sein. So kann es ermöglicht werden, den Ladeadapter 110 an unterschiedlich dimensionierte Batterien 110 und/oder an unterschiedliche Typen von Batterien 110 anzupassen.

Der Ladeadapter 110 umfasst, wie in Fig. 1b dargestellt, eine Ladespule 120, die für eine induktive Energieübertragung ausgebildet ist. Die Ladespule 120 kann flächig an dem Träger 115 des Ladeadapters 110 angeordnet sein. Die Ladespule 120 kann ausgebildet sein, in Reaktion auf ein magnetisches Ladefeld einen elektrischen (Wechsel-) Strom zu erzeugen. Der induzierte Strom kann durch einen Gleichrichter 125 in einen (gleichgerichteten) Ladestrom zum Laden der Fahrzeugbatterie 110 umgewandelt werden. Der gleichgerichtete Ladestrom kann über Leitungen 121, 122 zu den Kontakten 111, 112 und in die Fahrzeugbatterie 110 geleitet werden.

Der Ladeadapter 110 kann somit ausgebildet sein, über eine Ladespule 120 elektrische Energie von einem Ladegerät 150 aufzunehmen, und an die Kontakte 111, 112 zum Laden einer Fahrzeugbatterie 110 weiterzuleiten.

Es wird somit ein Ladeadapter 110 zum Laden einer Batterie 100 (Blei-Batterie, Lithium-Ionen-Batterie, etc.) beschrieben, der z.B. als steckbare Aufsatz zum Aufsetzen auf die Batterie 100 ausgebildet ist. Der Ladeadapter 110 ermöglicht eine induktive Energieübertragung von einem Ladegerät 150 auf eine Fahrzeugbatterie 100.

Der Ladeadapter 110 kann zum Laden einer Batterie 100 am Ende der Batterieproduktion und/oder während der Lagerung der Batterie 100 verwendet werden (ohne elektrische Kontaktierung eines Ladegeräts 150). Alternativ oder ergänzend kann der Ladeadapter 110 zum Laden der Batterie 100 in einem Lager (z.B. bei einem Fahrzeughändler) verwendet werden. Dabei kann der Ladeadapter 110 zum Laden unterschiedlicher Batterien 100 verwendet werden. Ggf. kann der Ladeadapter 110 auch dazu genutzt werden, eine Batterie 100 während eines Transportvorgangs zu laden.

Der Ladeadapter 110 kann als flacher Spulen-Aufsatz mit einer Diodenkopplung und/oder mit einem Gleichrichter 125 ausgebildet sein. Dabei kann der Aufsatz die Größe des Deckels 106 der Batterie 100 aufweisen. Der Ladeadapter 110 kann einen Laderegler 126 umfassen, um den Ladevorgang, insbesondere den Ladestrom, zu regeln. Der Träger 115 des Ladeadapters 110 kann als flexible Folien ausgebildet sein (z.B. als Batterietypenschild), die ggf. auf den Deckel 106 einer Batterie 100 aufgeklebt werden kann.

Wie in Fig. 1b dargestellt, kann eine Leiterbahn 121, 122 zwischen dem Gleichrichter 115 und einem Kontakt 111, 112 als (Schmelz-) Sicherung 127 ausgebildet sein. So kann zuverlässig ein Kurzschluss bei einem Ladevorgang verhindert werden.

Der Abstand der Kontakte 111, 112 kann variabel oder veränderbar ausgebildet sein. So kann der Ladeadapter 110 an unterschiedliche Batteriegrößen angepasst werden. Der Abstand der Kontakte 111, 112 gibt dabei einen Rückschluss auf die Batteriegröße. Beispielsweise kann eine Steuereinheit 130 des Ladeadapters 110 ausgebildet sein, den eingestellten Abstand der Kontakte 111, 112 zu ermitteln. Der Ladevorgang der Batterie 100 kann dann in Abhängigkeit von dem eingestellten Abstand der Kontakte 111, 112 durchgeführt werden.

Der Ladeadapter 110 kann als Batteriepolabdeckung ausgebildet sein, durch die nicht der gesamte Deckel 106 der Batterie 100, sondern nur ein Bereich um die Pole 101, 102 der Batterie 100 abgedeckt wird. So kann ein besonders kompakter Ladeadapter 110 bereitgestellt werden.

Der Ladeadapter 110 kann eine Anzeige 128 umfassen, die z.B. ausgebildet ist, den Ladestrom, die Batteriespannung und/oder die Temperatur der Batterie 100 anzuzeigen. Des Weiteren können Daten in Bezug auf einen Ladevorgang (z.B. der Ladestrom, die Batteriespannung und/oder die Temperatur) auf einer Speichereinheit (nicht dargestellt) gespeichert und/oder über eine drahtlose Datenübertragungseinheit 129 übertragen werden. So kann z.B. die Qualität eines Ladevorgang überwacht und/oder überprüft werden.

Zum Laden von mehreren Fahrzeugbatterien 100 kann ein Lageregal mit mehreren induktiven Energietransceivern 150 (mit jeweils einer Sendespule für ein oder mehrere Ladeadapter 110, abhängig von der Leistungsanforderung) bereitgestellt werden. Die Fahrzeugbatterien 100 können dann mit Ladeadaptern 110 in das Laderegal gestellt und bei Bedarf geladen werden.

Durch den in diesem Dokument beschriebenen Ladeadapter 110 kann ein effizientes und präzises Laden einer Fahrzeugbatterie 100 ermöglicht werden. So kann die Lebensdauer einer Fahrzeugbatterie 100 erhöht werden, da ein niedriger Ladezustand und/oder eine Tiefentladung vermieden werden können. Das Handling einer Batterie 100 bei der Herstellung, dem Transport und/oder der Lagerung können vereinfacht werden. Ggf. kann ein Laden von ein oder mehreren Batterien 100 während des Transports ermöglicht werden (z.B. Energy Harvesting auf einem LKW oder auf einem Zug). Ferner kann eine zuverlässige und effiziente Überwachung der Batterien 100 (insbesondere im eingelagerten Zustand) ermöglicht werden.

Die vorliegende Erfindung ist nicht auf die gezeigten Ausführungsbeispiele beschränkt. Insbesondere ist zu beachten, dass die Beschreibung und die Figuren nur beispielhaft das Prinzip der vorgeschlagenen Verfahren, Vorrichtungen und Systeme veranschaulichen sollen.

## Patentansprüche

1. Ladeadapter (110) zum Laden einer Fahrzeugbatterie (100); wobei der Ladeadapter (110) umfasst,
- einen Träger (115);
- eine an dem Träger (115) befestigte Ladespule (120), die ausgebildet ist, in Reaktion auf ein magnetisches Ladefeld einen Wechsel-Ladestrom zu generieren;
- einen an dem Träger (115) befestigten Gleichrichter (125), der eingerichtet ist, auf Basis des Wechsel-Ladestroms einen gleichgerichteten Ladestrom zu erzeugen;
- einen an dem Träger (115) befestigten Plus-Kontakt (111) und einen an dem Träger (115) befestigten Minus-Kontakt (112), die ausgebildet sind, auf einen Plus-Pol (101) und einen Minus-Pol (102) einer Fahrzeugbatterie (100) gesteckt zu werden; und
- Leitungen (121, 122), die ausgebildet sind, den gleichgerichteten Ladestrom an den Plus-Kontakt (111) und den Minus-Kontakt (112) zu leiten.

2. Ladeadapter (110) gemäß Anspruch 1, wobei der Ladeadapter (110) als steckbarer Aufsatz ausgebildet ist, der auf einen Deckel (106) einer Fahrzeugbatterie (100) gesteckt werden kann.

3. Ladeadapter (110) gemäß einem der vorhergehenden Ansprüche, wobei der Träger (115) als Folie, insbesondere als Klebefolie, ausgebildet ist.

4. Ladeadapter (110) gemäß einem der Ansprüche 1 bis 2, wobei der Träger (115) als Platte, insbesondere als starre Platte, ausgebildet ist.

5. Ladeadapter (110) gemäß einem der vorhergehenden Ansprüche, wobei
- der Plus-Kontakt (111) und/oder der Minus-Kontakt (112) verschiebbar an dem Träger (115) angeordnet sind; und/oder
- der Plus-Kontakt (111) und/oder der Minus-Kontakt (112) derart an dem Träger (115) angeordnet sind, dass ein Abstand zwischen dem Plus-Kontakt (111) und dem Minus-Kontakt (112) veränderbar ist; und/oder
- der Plus-Kontakt (111) und/oder der Minus-Kontakt (112) über eine Schiene (116) verschiebbar an dem Träger (115) angeordnet sind.

6. Ladeadapter (110) gemäß einem der vorhergehenden Ansprüche, wobei
- die Ladespule (120) eine Flachspule umfasst, insbesondere ist; und/oder
- die Ladespule (120) derart an dem Träger (115) angeordnet ist, dass zum Laden einer Fahrzeugbatterie (100) ein induktives Ladegerät (150), das ausgebildet ist, das magnetische Ladefeld zu generieren, auf den Träger (115) gelegt werden kann; und/oder
- die Ladespule (120) derart an dem Träger (115) angeordnet ist, dass ein Kopplungsfaktor zwischen einer Spule eines induktiven Ladegeräts (150) und der Ladespule (120) maximal ist, wenn das induktive Ladegerät (150) auf den Träger (115) gelegt wird.

7. Ladeadapter (110) gemäß einem der vorhergehenden Ansprüche, wobei
- der Ladeadapter (110) eine Anzeige (128) umfasst; und
- der Ladeadapter (110) eine Steuereinheit (130) umfasst, die eingerichtet ist,
- Daten in Bezug auf den Ladestrom, in Bezug auf eine Batteriespannung und/oder in Bezug auf eine Temperatur der Fahrzeugbatterie (100) zu ermitteln; und
- über die Anzeige (128) auszugeben.

8. Ladeadapter (110) gemäß einem der vorhergehenden Ansprüche, wobei der Ladeadapter (110) einen Laderegler (126) umfasst, der eingerichtet ist, während eines Ladevorgangs einer Fahrzeugbatterie (100), den Ladestrom und/oder eine Ladespannung einzustellen, insbesondere zu regeln.

9. Ladeadapter (110) gemäß einem der vorhergehenden Ansprüche, wobei der Ladeadapter (110) eine Kommunikationseinheit (129) umfasst, die eingerichtet ist, Daten in Bezug auf die Fahrzeugbatterie (100) und/oder in Bezug auf einen Ladevorgang der Fahrzeugbatterie (100) über eine Kommunikationsverbindung, insbesondere über eine drahtlose Kommunikationsverbindung, zu versenden.

10. Ladeadapter (110) gemäß einem der vorhergehenden Ansprüche, wobei der Ladeadapter (110) eine Steuereinheit (130) umfasst, die eingerichtet ist,
- Abstandsinformation in Bezug auf einen eingestellten Abstand zwischen dem Plus-Kontakt (111) und dem Minus-Kontakt (112) zu ermitteln; und
- einen Ladevorgang einer Fahrzeugbatterie (100), an der der Ladeadapter (110) befestigt ist, in Abhängigkeit von der Abstandsinformation zu steuern.

11. Ladeadapter (110) gemäß einem der vorhergehenden Ansprüche, wobei zumindest eine der Leitungen (121, 122) eine Sicherung (127), insbesondere eine Schmelzsicherung, aufweist.

12. Ladeadapter (110) gemäß einem der vorhergehenden Ansprüche, wobei
- der Ladeadapter (110) ausgebildet ist, eine 12V Fahrzeugbatterie (100) zu laden; und/oder
- der Ladeadapter (110) ausgebildet ist, eine Blei-Batterie (100) zu laden; und/oder
- der Ladeadapter (110) ausgebildet ist, eine Starter-Batterie (100) zu laden.

## Claims

1. Charge adapter (110) for charging a vehicle battery (100), wherein the charge adapter (110) comprises
- a support (115);
- a charging coil (120) which is secured to the support (115) and is designed to generate an alternating charging current in response to a magnetic charging field;
- a rectifier (125) which is secured to the support (115) and which is set up to generate a rectified charging current on the basis of the alternating charging current;
- a plus contact (111) secured to the support (115) and a minus contact (112) secured to the support (115), which are designed to be plugged onto a plus pole (101) and a minus pole (102) of a vehicle battery (100); and
- lines (121, 122), which are designed to conduct the rectified charging current to the plus contact (111) and the minus contact (112).

2. Charge adapter (110) according to Claim 1, wherein the charge adapter (110) is designed as a pluggable attachment, which can be plugged onto a cover (106) of a vehicle battery (100).

3. Charge adapter (110) according to one of the preceding claims, wherein the support (115) is designed as a film, in particular as an adhesive film.

4. Charge adapter (110) according to either of Claims 1 and 2, wherein the support (115) is designed as a plate, in particular as a rigid plate.

5. Charge adapter (110) according to one of the preceding claims, wherein
- the plus contact (111) and/or the minus contact (112) are arranged displaceably on the support (115); and/or
- the plus contact (111) and/or the minus contact (112) are arranged on the support (115) in such a way that a spacing between the plus contact (111) and the minus contact (112) is variable; and/or
- the plus contact (111) and/or the minus contact (112) are arranged displaceably on the support (115) via a rail (116).

6. Charge adapter (110) according to one of the preceding claims, wherein
- the charging coil (120) comprises, in particular is, a flat coil; and/or
- the charging coil (120) is arranged on the support (115) in such a way that to charge a vehicle battery (100), an inductive charging device (150) which is designed to generate the magnetic charging field can be laid on the support (115); and/or
- the charging coil (120) is arranged on the support (115) in such a way that a coupling factor between a coil of an inductive charging device (150) and the charging coil (120) is at a maximum when the inductive charging device (150) is laid on the carrier (115).

7. Charge adapter (110) according to one of the preceding claims, wherein
- the charge adapter (110) comprises a display (128); and
- the charge adapter (110) comprises a control unit (130), which is set up
- to determine data relating to the charging current, relating to a battery voltage and/or relating to a temperature of the vehicle battery (100); and
- to output the data via the display (128).

8. Charge adapter (110) according to one of the preceding claims, wherein the charge adapter (110) comprises a charging controller (126) which is set up to adjust, in particular to control, the charging current and/or a charging voltage during a charging process of a vehicle battery (100).

9. Charge adapter (110) according to one of the preceding claims, wherein the charge adapter (110) comprises a communication unit (129) which is set up to transmit data relating to the vehicle battery (100) and/or relating to a charging process of the vehicle battery (100) via a communication link, in particular via a wireless communication link.

10. Charge adapter (110) according to one of the preceding claims, wherein the charge adapter (110) comprises a control unit (130), which is set up
- to determine spacing information relating to a set spacing between the plus contact (111) and the minus contact (112); and
- to control a charging process of a vehicle battery (100) to which the charge adapter (110) is secured, depending on the spacing information.

11. Charge adapter (110) according to one of the preceding claims, wherein at least one of the lines (121, 122) has a fuse (127), in particular a fusible link.

12. Charge adapter (110) according to one of the preceding claims, wherein
- the charge adapter (110) is designed to charge a 12 V vehicle battery (100); and/or
- the charge adapter (110) is designed to charge a lead battery (100); and/or
- the charge adapter (110) is designed to charge a starter battery (100).

## Revendications

1. Adaptateur de charge (110) permettant de charger une batterie de véhicule (100) ; l'adaptateur de charge (110) comprenant
- un support (115) ;
- une bobine de charge (120) fixée au support (115) et qui est réalisée pour générer un courant de charge alternatif en réponse à un champ de charge magnétique ;
- un redresseur (125) fixé au support (115) et qui est conçu pour générer un courant de charge redressé sur la base du courant de charge alternatif ;
- un contact positif (111) fixé au support (115), et un contact négatif (112) fixé au support (115), qui sont réalisés pour être enfichés sur un pôle positif (101) et un pôle négatif (102) d'une batterie de véhicule (100) ; et
- des lignes (121, 122) qui sont réalisées pour conduire le courant de charge redressé vers le contact positif (111) et le contact négatif (112).

2. Adaptateur de charge (110) selon la revendication 1, dans lequel l'adaptateur de charge (110) est réalisé sous forme de rehausse enfichable qui peut être enfichée sur un couvercle (106) d'une batterie de véhicule (100).

3. Adaptateur de charge (110) selon l'une quelconque des revendications précédentes, dans lequel le support (115) est réalisé sous forme de feuille, en particulier de feuille adhésive.

4. Adaptateur de charge (110) selon l'une quelconque des revendications 1 à 2, dans lequel le support (115) est réalisé sous forme de plaque, en particulier de plaque rigide.

5. Adaptateur de charge (110) selon l'une quelconque des revendications précédentes, dans lequel
- le contact positif (111) et/ou le contact négatif (112) sont disposés de manière coulissante sur le support (115) ; et/ou
- le contact positif (111) et/ou le contact négatif (112) sont disposés sur le support (115) de telle sorte qu'une distance entre le contact positif (111) et le contact négatif (112) est variable ; et/ou
- le contact positif (111) et/ou le contact négatif (112) sont disposés sur le support (115) de manière à pouvoir coulisser sur un rail (116).

6. Adaptateur de charge (110) selon l'une quelconque des revendications précédentes, dans lequel
- la bobine de charge (120) comprend, en particulier est, une bobine plate ; et/ou
- la bobine de charge (120) est disposée sur le support (115) de telle sorte que pour recharger une batterie de véhicule (100), un chargeur à induction (150) peut être posé sur le support (115) et qui est réalisé pour générer le champ de charge magnétique ; et/ou
- la bobine de charge (120) est disposée sur le support (115) de telle sorte qu'un coefficient de couplage entre une bobine d'un chargeur à induction (150) et la bobine de charge (120) est maximal lorsque le chargeur à induction (150) est posé sur le support (115) .

7. Adaptateur de charge (110) selon l'une quelconque des revendications précédentes, dans lequel
- l'adaptateur de charge (110) comprend un affichage (128) ; et
- l'adaptateur de charge (110) comprend une unité de commande (130) qui est conçue pour
- établir des données concernant le courant de charge, concernant une tension de batterie et/ou concernant une température de la batterie de véhicule (100) ; et
- les sortir par l'intermédiaire de l'affichage (128).

8. Adaptateur de charge (110) selon l'une quelconque des revendications précédentes, dans lequel l'adaptateur de charge (110) comprend un régulateur de charge (126) qui est conçu pour régler, en particulier réguler, le courant de charge et/ou une tension de charge pendant un processus de charge d'une batterie de véhicule (100).

9. Adaptateur de charge (110) selon l'une quelconque des revendications précédentes, dans lequel l'adaptateur de charge (110) comprend une unité de communication (129) qui est conçue pour envoyer des données concernant la batterie de véhicule (100) et/ou concernant un processus de charge de la batterie de véhicule (100) par une liaison de communication, en particulier par une liaison de communication sans fil.

10. Adaptateur de charge (110) selon l'une quelconque des revendications précédentes, dans lequel l'adaptateur de charge (110) comprend une unité de commande (130) qui est conçue pour
- établir des informations d'espacement concernant un espacement réglé entre le contact positif (111) et le contact négatif (112) ; et
- commander un processus de charge d'une batterie de véhicule (100) à laquelle est fixé l'adaptateur de charge (110) en fonction des informations d'espacement.

11. Adaptateur de charge (110) selon l'une quelconque des revendications précédentes, dans lequel au moins l'une des lignes (121, 122) présente un fusible (127), en particulier un fusible de protection.

12. Adaptateur de charge (110) selon l'une quelconque des revendications précédentes, dans lequel
- l'adaptateur de charge (110) est réalisé pour charger une batterie de véhicule 12 V (100) ; et/ou
- l'adaptateur de charge (110) est réalisé pour charger une batterie au plomb (100) ; et/ou
- l'adaptateur de charge (110) est réalisé pour charger une batterie de démarreur (100).
